(19) Europäisches Patentamt
European Patent Office
Office européen des brevets

(11) EP 1 458 471 B1

(12) FASCICULE DE BREVET EUROPEEN

(45) Date de publication et mention de la délivrance du brevet:
**11.11.2015 Bulletin 2015/46**

(21) Numéro de dépôt: **02799830.1**

(22) Date de dépôt: **19.12.2002**

(51) Int Cl.:
***B01J 13/00*** *(2006.01)*

(86) Numéro de dépôt international:
**PCT/FR2002/004453**

(87) Numéro de publication internationale:
**WO 2003/053560 (03.07.2003 Gazette 2003/27)**

(54) **DISPERSION COLLOIDALE ORGANIQUE DE PARTICULES DE FER, SON PROCEDE DE PREPARATION ET SON UTILISATION COMME ADJUVANT DE CARBURANT POUR MOTEURS A COMBUSTION INTERNE**

KOLLOIDALE, ORGANISCHE DISPERSION, DIE EISENPARTIKELN ENTHÄLT, IHRE HERSTELLUNGSVERFAHREN SOWIE IHRE VERWENDUNG ALS TREIBSTOFFZUSATZMITTEL FÜR VERBRENNUGSMOTOREN

ORGANIC COLLOIDAL DISPERSION OF IRON PARTICLES, METHOD FOR PREPARING SAME AND USE THEREOF AS FUEL ADDITIVE FOR INTERNAL COMBUSTION ENGINES

(84) Etats contractants désignés:
**AT BE BG CH CY CZ DE DK EE ES FI FR GB GR IE IT LI LU MC NL PT SE SI SK TR**

(30) Priorité: **21.12.2001 FR 0116710**

(43) Date de publication de la demande:
**22.09.2004 Bulletin 2004/39**

(73) Titulaire: **Rhodia Operations**
**75009 Paris (FR)**

(72) Inventeurs:
- **BLANCHARD, Gilbert**
  **F-60330 Lagny-le-Sec (FR)**
- **CHANE-CHING, Jean-Yves**
  **F-95600 Eaubonne (FR)**
- **TOLLA, Bruno**
  **F-75005 Paris (FR)**

(74) Mandataire: **Senninger, Thierry**
**Rhodia Operations**
**Département de la Propriété Industrielle**
**40, rue de la Haie-Coq**
**93306 Aubervilliers Cedex (FR)**

(56) Documents cités:
**WO-A-01/94262**
**FR-A- 2 780 096**
**FR-A- 2 797 199**
**US-A- 6 136 048**
**US-B1- 6 271 269**

- **DATABASE WPI Section Ch, Week 197650 Derwent Publications Ltd., London, GB; Class E31, AN 1976-93072X XP002213257 & JP 51 122107 A (TAIHO INDS KK), 26 octobre 1976 (1976-10-26)**
- **DATABASE WPI Section Ch, Week 198735 Derwent Publications Ltd., London, GB; Class E19, AN 1987-245999 XP002213258 & JP 62 167393 A (TAIHO KOGYO CO LTD), 23 juillet 1987 (1987-07-23)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 458 471 B1

## Description

La présente invention concerne une dispersion colloïdale organique de particules de fer, son procédé de préparation et son utilisation comme adjuvant de carburant pour moteurs à combustion interne.
On sait que lors de la combustion du gazole dans le moteur diesel, les produits carbonés ont tendance à former des suies, qui sont réputées nocives tant pour l'environnement que pour la santé. On recherche depuis longtemps des techniques qui permettent de réduire l'émission de ces particules carbonées, qu'on désignera dans la suite de la description sous l'expression de "suies".
Une solution satisfaisante consiste à introduire dans les suies des catalyseurs qui permettent une auto-inflammation fréquente de celles-ci collectées dans le filtre. Pour cela, il faut que ces suies présentent une température d'auto-inflammation suffisamment basse pour être fréquemment atteinte pendant une marche normale du moteur.
On sait que des dispersions de composés de terre rare ou de fer utilisées comme adjuvant des carburants peuvent contribuer à la réduction de la température d'auto-inflammation des suies.
Ces dispersions doivent présenter une bonne dispersibilité dans le milieu dans lequel elles sont introduites, une stabilité élevée dans le temps et une activité catalytique suffisante à une concentration relativement peu élevée.
Les dispersions connues à ce jour ne satisfont pas toujours à tous ces critères. Elles peuvent présenter par exemple une bonne dispersibilité mais pas une stabilité suffisante, ou une bonne stabilité mais une activité catalytique à des concentrations trop élevées pour qu'elles soient économiquement intéressantes.
En outre, leur mode de préparation peut être complexe. Par exemple, ces dispersions sont des dispersions de particules en phase organique et elles sont généralement obtenues par transfert d'une dispersion de départ en phase aqueuse dans la phase organique finale. Or, ce transfert peut être difficile à réaliser.
US 6136048 décrit des dispersions colloïdales de particules qui sont à base d'oxydes mixtes de terre rare et de fer, c'est-à-dire un mélange homogène de ces éléments. Ce document ne donne aucun enseignement sur des dispersions à base de fer uniquement. Le procédé qui y est décrit comprend une étape de séchage d'un précipité qui est ensuite mis en contact avec une phase organique pour obtenir la dispersion finale.
US 6271269 concerne une dispersion colloïdale d'un composé de cérium ou de fer mais dont la taille des particules est importante, c'est-à-dire d'au moins 100 Å.
WO 01/94262 décrit des dispersions qui sont à base de cérium ou de cérium en combinaison avec un autre élément comme le fer. Les colloïdes de ces dispersions sont, là aussi, des oxydes mixtes de fer et de cérium.
JP 51122107-A concerne des dispersions colloïdales dont les tailles des particules sont importantes et notamment d'au moins 50 Å.
JP 62167393-A décrit aussi des dispersions colloïdales à base de fer mais dont la taille des particules est en fait comprise entre 50 et 500Å.
L'objet de l'invention est de fournir une dispersion colloïdale à propriétés améliorées et dont la préparation est plus facile à mettre en oeuvre.
Dans ce but, et selon un premier mode de réalisation, la dispersion colloïdale de l'invention est caractérisée en ce qu'elle comprend :

- une phase organique;
- des particules d'un composé du fer sous forme amorphe, consistant essentiellement en un oxyde, un hydroxyde ou un oxyhydroxyde de fer ou un mélange de ceux-ci et présentant un $d_{50}$ compris entre 1 nm et 5nm;
- au moins un agent amphiphile.

Selon un second mode de réalisation de l'invention, l'invention concerne en outre une dispersion colloïdale qui est caractérisée en ce qu'elle comprend :

- une phase organique;
- des particules d'un composé du fer sous forme amorphe, consistant essentiellement en un oxyde, un hydroxyde ou un oxyhydroxyde de fer ou un mélange de ceux-ci et présentant un $d_{50}$ compris entre 1nm et 5nm;
- des particules d'un composé d'une terre rare;
- au moins un agent amphiphile.

L'invention concerne aussi un procédé de préparation de la dispersion selon le premier mode précité qui est caractérisé en ce qu'il comporte les étapes suivantes :

- a) on fait réagir avec une base soit un sel de fer en présence d'un complexant du fer soit un complexe du fer, en maintenant le pH du milieu réactionnel à une valeur d'au plus 8 ce par quoi on obtient un précipité, le complexant du fer étant choisi parmi les acides carboxyliques hydrosolubles présentant une constante de complexation K telle

que le pK soit d'au moins 3 et le complexe du fer étant choisi parmi les produits de la réaction des sels de fer avec lesdits acides;

- b) on met en contact avec une phase organique en présence d'un agent amphiphile
  - soit le précipité directement obtenu à l'issue de la réaction de l'étape a) et séparé du milieu réactionnel,
  - soit le précipité en suspension dans son milieu réactionnel,
  - soit le précipité directement obtenu à l'issue de la réaction de l'étape a), séparé du milieu réactionnel et remis en suspension aqueuse,

ce par quoi on obtient la dispersion en phase organique.

La dispersion de l'invention présente l'avantage d'être très stable. Elle présente en outre une activité élevée. Le procédé de préparation de la dispersion selon le premier mode de réalisation permet un transfert efficace de la phase aqueuse à la phase organique.

D'autres caractéristiques, détails et avantages de l'invention apparaîtront encore plus complètement à la lecture de la description qui va suivre, ainsi que des divers exemples et figures destinés à l'illustrer.

Dans la présente description, l'expression "dispersion colloïdale" désigne tout système constitué de fines particules solides d'un composé du fer ou d'un composé de terre rare, de dimensions colloïdales, en suspension dans une phase liquide, lesdites particules pouvant, en outre, éventuellement contenir des quantités résiduelles d'ions liés ou adsorbés tels que par exemple des ions acétates ou des ammoniums. On notera que dans une telle dispersion, le fer ou la terre rare peut se trouver soit totalement sous la forme de colloïdes, soit simultanément sous la forme d'ions et sous la forme de colloïdes.

La dispersion selon le premier mode de réalisation de l'invention va maintenant être décrit.

La dispersion de l'invention est une dispersion en phase organique.

Cette phase organique est choisie notamment en fonction de l'utilisation de la dispersion.

La phase organique peut être à base d'un hydrocarbure apolaire notamment.

A titre d'exemple de phase organique, on peut citer les hydrocarbures aliphatiques comme l'hexane, l'heptane, l'octane, le nonane, les hydrocarbures cycloaliphatiques inertes tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso (marque déposée par la Société EXXON), notamment Solvesso 100 qui contient essentiellement un mélange de méthyléthyl- et triméthyl-benzène, le Solvesso 150 qui renferme un mélange d'alcoylbenzènes en particulier de diméthylbenzène et de tétraméthylbenzène et l'Isopar qui contient essentiellement des hydrocarbures iso- et cyclo-parraffiniques en C-11 et C-12.

On peut mettre en oeuvre également pour la phase organique des hydrocarbures chlorés tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthylisobutylcétone, la diisobutylcétone, l'oxyde de mésityle, peuvent être envisagés.

Bien entendu, la phase organique peut être à base d'un mélange de deux ou plusieurs hydrocarbures du type décrits ci-dessus.

Les particules de la dispersion de l'invention sont des particules d'un composé du fer dont la composition correspond essentiellement à un oxyde et/ou un hydroxyde et/ou un oxyhydroxyde de fer. Le fer est généralement présent esentiellement à l'état d'oxydation 3. Les particules contiennent en outre un complexant. Ce complexant correspond à celui qui a été mise en oeuvre dans le procédé de préparation de la dispersion soit tel quel soit sous forme du complexe du fer.

Les particules de la dispersion de l'invention sont à base d'un composé du fer qui est amorphe. Ce caractère amorphe peut être mis en évidence par analyse RX, les diagrammes RX obtenus ne montrent en effet aucun pic significatif.

Selon une autre caractéristique de l'invention, au moins 85%, plus particulièrement au moins 90% et encore plus particulièrement au moins 95% des particules sont des particules primaires. On entend par particule primaire une particule qui est parfaitement individualisée et qui n'est pas agrégée avec une autre ou plusieurs autres particules. Cette caractéristique peut être mise en évidence en examinant la dispersion par MET (microscopie électronique à transmission haute résolution).

On peut aussi utiliser la technique de cryo-MET pour déterminer l'état d'agrégation des particules élémentaires. Elle permet d'observer par microscopie électronique à transmission (MET) des échantillons maintenus congelés dans leur milieu naturel qui est soit de l'eau soit des diluants organiques tels que les solvants aromatiques ou aliphatiques comme par exemple le Solvesso et l'Isopar ou bien certains alcools tel que l'éthanol.

La congélation s'effectue sur des films minces d'environ 50nm à 100nm d'épaisseur soit dans l'éthane liquide pour les échantillons aqueux soit dans l'azote liquide pour les autres.

Par cryo-MET l'état de dispersion des particules est bien préservé et représentatif de celui présent dans le milieu réel.

Cette caractéristique des particules de la dispersion contribue à sa stabilité.

Par ailleurs, les particules de la dispersion de l'invention présentent une granulométrie fine. En effet, elles possèdent un $d_{50}$ compris entre 1nm et 5nm, plus particulièrement entre 3nm et 4nm.

La granulométrie est déterminée par microscopie électronique à transmission (MET), de manière classique, sur un échantillon préalablement séché sur une membrane de carbone supportée sur grille de cuivre.

Cette technique de préparation de l'échantillon est préférée car elle permet une meilleure précision de la mesure de la taille des particules. Les zones choisies pour les mesures sont celles qui présentent un état de dispersion semblable à celui observé en cryo-MET.

Les particules de la dispersion de l'invention peuvent être de morphologie isotrope, notamment elles peuvent présenter un rapport L(plus grande dimension)/l (plus petite dimension) d'au plus 2.

La dispersion colloïdale organique selon l'invention comporte avec la phase organique au moins un agent amphiphile.

Cet agent amphiphile peut être un acide carboxylique qui comporte généralement de 10 à 50 atomes de carbone, de préférence de 15 à 25 atomes de carbone.

Cet acide peut être linéaire ou ramifié. Il peut être choisi parmi les acides aryliques, aliphatiques ou arylaliphatiques, portant éventuellement d'autres fonctions à condition que ces fonctions soient stables dans les milieux où l'on désire utiliser les dispersions selon la présente invention. Ainsi, on peut mettre en oeuvre par exemple des acides carboxyliques aliphatiques, des acides sulfoniques aliphatiques, des acides phosphoniques aliphatiques, des acides alcoylarylsulfoniques et des acides alcoylarylphosphoniques, qu'ils soient naturels ou synthétiques. Il est bien entendu possible d'utiliser des acides en mélange.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène sulfonique, l'acide toluène phosphonique, l'acide lauryl sulfonique, l'acide lauryl phosphonique, l'acide palmityl sulfonique, et l'acide palmityl phosphonique.

Dans le cadre de la présente invention, l'agent amphiphile peut également être choisi parmi les alkyl éthers phosphates polyoxyéthylénés. On entend ici les phosphates de formule :

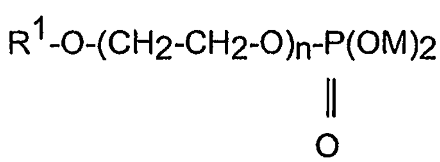

ou encore les phosphates de dialcoyle polyoxyéthylénés de formule :

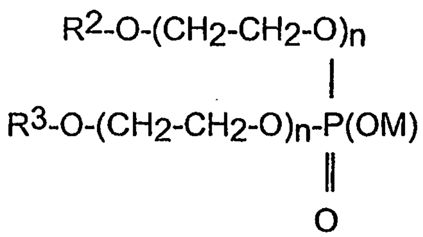

formules dans lesquelles :

- R1, R2, R3, identiques ou différents représentent un radical alkyl linéaire ou ramifié, notamment de 2 à 20 atomes de carbone; un radical phényle; un radical alkylaryl, plus particulièrement un radical alkylphényl, avec notamment une chaîne alkyle de 8 à 12 atomes de carbone; un radical arylalkyle, plus particulièrement un radical phénylaryl;
- n le nombre d'oxyde d'éthylène pouvant aller de 0 à 12 par exemple;
- M représente un atome d'hydrogène, de sodium ou de potassium.

Le radical $R^1$ peut être notamment un radical hexyle, octyle, décyle, dodécyle, oléyle, nonylphényle.

On peut citer comme exemple de ce type de composés amphiphiles ceux commercialisés sous les marques Lubrophos® et Rhodafac® vendu par Rhodia et notamment les produits ci-dessous :

- les poly-oxy-éthylène alkyl (C8-C10) éthers phosphates Rhodafac® RA 600

- le poly-oxyéthylène tridécyl éther phosphate Rhodafac® RS 710 ou RS 410
- le poly-oxy-éthylène oléocétyl éther phosphate Rhodafac® PA 35
- le poly-oxy-éthylène nonylphenyl éther phosphate Rhodafac® PA 17
- le poly-oxy-éthylène nonyl(ramifié) éther phosphate Rhodafac® RE 610.

Enfin, on peut aussi mentionner comme agent amphiphile les alkyl éther carboxylates polyoxyéthylénés de formule : $R^4-(OC_2H_4)_n-O-R^5$ dans laquelle $R^4$ est un radical alkyl linéaire ou ramifié pouvant comprendre notamment 4 à 20 atomes de carbone, n est un nombre entier pouvant aller par exemple jusqu'à 12 et $R^5$ est un reste d'acide carboxylique comme par exemple $-CH_2COOH$. A titre d'exemple, on peut mentionner pour ce type de composé amphiphile ceux commercialisé sous la marque AKIPO® par Kao Chemicals.

Les dispersions selon l'invention présentent une concentration en composé du fer qui peut être d'au moins 8%, plus particulièrement d'au moins 15% et encore plus particulièrement d'au moins 30%, cette concentration étant exprimée en poids équivalent d'oxyde de fer III par rapport au poids total de la dispersion. Cette concentration peut aller jusqu'à 40%.

Les dispersions de l'invention présentent une excellente stabilité. On n'observe pas de décantation au bout de plusieurs mois.

Comme cela a été indiqué plus haut, l'invention concerne aussi, selon un second mode de réalisation, une dispersion qui comprend en mélange dans une phase organique des particules d'un composé du fer sous forme amorphe et des particules d'un composé d'une terre rare, la dispersion comprenant en outre un agent amphiphile.

Tout ce qui a été décrit plus haut pour le premier mode de réalisation de l'invention et concernant notamment la nature de la phase organique et de l'agent amphiphile s'applique aussi ici.

Par ailleurs, la terre rare du composé de terre rare peut être choisie parmi le cérium, le lanthane, l'yttrium, le néodyme, le gadolinium, le praséodyme. Le cérium peut être plus particulièrement choisi.

Les particules du composé de terre rare peuvent présenter éventuellement les mêmes caractéristiques que celles qui ont-été données plus haut pour le composé du fer, notamment pour les dimensions ou la morphologie. Ainsi, elles peuvent posséder un $d_{50}$ de la même valeur que celle donnée plus haut et être aussi des particules primaires comme indiquées précédemment.

Les proportions entre le composé du fer et celui de terre rare peuvent être comprises dans un large domaine. Toutefois, le rapport molaire composé du fer/composé de terre rare est généralement compris entre 0,5 et 1,5 et il peut être plus particulièrement égal à 1.

Le composé de la terre rare peut être un oxyde et/ou un hydroxyde et/ou un oxyhydroxyde de terre rare. Ce composé peut aussi être un composé organométallique.

Le procédé de préparation des dispersions de l'invention selon le premier mode de réalisation de l'invention va maintenant être décrit.

La première étape du procédé consiste à faire réagir avec une base soit un sel de fer en présence d'un complexant du fer soit un complexe du fer. Cette réaction se fait en milieu aqueux.

Comme base, on peut utiliser notamment les produits du type hydroxyde.. On peut citer les hydroxydes d'alcalins ou d'alcalino-terreux et l'ammoniaque. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

Comme sel de fer on peut utiliser tout sel soluble dans l'eau. On peut mentionner plus particulièrement le nitrate ferrique.

Selon une caractéristique spécifique du procédé de l'invention, la réaction du sel de fer avec la base se fait en présence d'un complexant du fer.

Les complexants du fer sont choisis parmi les acides carboxyliques hydrosolubles présentant une constante de complexation K telle que le pK soit d'au moins 3. Pour la réaction :

$$Fe^{3+} + xL^- \rightleftharpoons FeL_x^{3-x}$$

dans laquelle L désigne le complexant, on définit la constante K de la manière suivant :

$$k = FeL_x^{3-x} / [Fe^{3+}].[L^-]^x$$

$$\text{et } pK = \log(1/k)$$

Comme acides répondant aux caractéristiques ci-dessus, on peut mentionner les acides carboxyliques aliphatiques comme l'acide formique et l'acide acétique. Conviennent aussi les acides-alcools ou les polyacides-alcools. Comme exemple d'acide-alcool, on peut citer l'acide glycolique ou l'acide lactique. Comme polyacide-alcool, on peut mentionner l'acide malique, l'acide tartrique et l'acide citrique.

Comme autres acides qui conviennent on peut aussi citer les aminoacides comme la lysine, l'alanine, la sérine, le glycocolle, l'acide aspartique ou l'arginine. On peut aussi mentionner l'acide éthylène-diamino-tétracétique ou l'acide nitrilo-tri-acétique ou encore l'acide glutamique N, N diacétique de formule $(HCOO^-)CH_2CH_2-CH(COOH)N(CH_2COO^-H)_2$ ou son sel de sodium $(NaCOO^-)CH_2CH_2-CH(COONa)N(CH_2COO^-Na)_2$.

Comme autres complexants convenables, on peut utiliser les acides polyacryliques et leurs sels comme le polyacrylate de sodium, et plus particulièrement ceux dont la masse moléculaire en poids est comprise entre 2000 et 5000.

On notera enfin que plusieurs complexants peuvent être utilisés conjointement.

Comme indiqué plus haut, la réaction avec la base peut aussi se faire avec un complexe du fer. Dans ce cas, le complexe du fer utilisé est un produit résultant de la complexation du fer avec un complexant du type décrit ci-dessus. Ce produit peut être obtenu par réaction d'un sel de fer avec ledit complexant.

La quantité utilisée de complexant exprimée en rapport molaire complexant/fer est de préférence comprise entre 0,5 et 4, plus particulièrement entre 0,5 et 1,5 et encore plus particulièrement entre 0,8 et 1,2.

La réaction entre le sel de fer et la base se fait dans des conditions telles que le pH du mélange réactionnel que l'on forme soit d'au plus 8. Ce pH peut être plus particulièrement d'au plus 7,5 et il peut être compris notamment entre 6,5 et 7,5.

La mise en contact du mélange aqueux et du milieu basique peut se faire par introduction d'une solution du sel de fer dans une solution contenant la base. Il est possible de réaliser la mise en contact en continu, la condition de pH étant réalisée en réglant les débits respectifs de la solution du sel de fer et de la solution contenant la base.

Il est possible, selon un mode de réalisation préféré de l'invention, de travailler dans des conditions telles que lors de la réaction entre le sel de fer et la base on maintienne constant le pH du milieu réactionnel ainsi formé. Par maintien constant du pH on entend une variation du pH de $\pm$ 0,2 unité de pH par rapport à la valeur fixée. De telles conditions peuvent être obtenues en ajoutant lors de la réaction entre le sel de fer et la base, par exemple lors de l'introduction de la- solution du sel de fer dans la solution de la base, une quantité supplémentaire de base au mélange réactionnel formé.

La réaction se fait habituellement à température ambiante. Cette réaction peut avantageusement être réalisée sous atmosphère d'air ou d'azote ou d'un mélange azote-air.

A l'issue de la réaction on obtient un précipité. Il est éventuellement possible de faire subir un mûrissement au précipité en le maintenant pendant un certain temps, par exemple quelques heures, dans le milieu réactionnel.

Le précipité peut être séparé du milieu réactionnel par tout moyen connu. Le précipité peut être lavé.

De préférence, le précipité n'est pas soumis à une étape de séchage ou de lyophilisation ou toute opération de ce type.

Le précipité peut éventuellement être remis en suspension aqueuse.

On notera cependant qu'il est tout à fait possible de ne pas séparer le précipité du milieu réactionnel dans lequel il a été obtenu.

Pour obtenir une dispersion colloïdale en phase organique, on met en contact avec la phase organique dans laquelle on souhaite obtenir la dispersion colloïdale soit le précipité séparé, soit la suspension aqueuse obtenue plus haut après séparation du précipité du milieu réactionnel, soit encore le précipité en suspension dans son milieu réactionnel. Cette phase organique est du type de celle qui a été décrite plus haut.

Cette mise en contact se fait en présence de l'agent amphiphile précité. La quantité de cet agent amphiphile à incorporer peut être défini par le rapport molaire r :

$$r = \frac{\text{nombre de mole d'agent amphiphile}}{\text{nombre de mole d'éléments de fer}}$$

Ce rapport molaire peut être compris 0,2 et 1, de préférence entre 0,4 et 0,8.

La quantité de phase organique à incorporer est ajustée de manière à obtenir une concentration en oxyde telle que mentionnée plus haut.

A ce stade, il peut être avantageux d'ajouter dans la phase organique un agent promoteur dont la fonction est d'accélérer le transfert des particules de composé du fer de la phase aqueuse à la phase organique, si l'on travaille à partir d'une suspension du précipité, et d'améliorer la stabilité des dispersions colloïdales organiques obtenues.

A titre d'agent promoteur, on peut utiliser les composés à fonction alcool et tout particulièrement des alcools aliphatiques linéaires ou ramifiés ayant de 6 à 12 atomes de carbone. Comme exemples spécifiques, on peut citer l'éthyl-2 hexanol, le décanol, le dodécanol ou leurs mélanges.

La proportion dudit agent n'est pas critique et peut varier dans de larges limites. Toutefois, une proportion comprise entre 2 et 15 % en poids par rapport à l'ensemble de la dispersion convient généralement bien.

L'ordre de l'introduction des différents éléments de la dispersion est indifférent. On peut effectuer le mélange simultané de la suspension aqueuse, de l'agent amphiphile, de la phase organique, et éventuellement de l'agent promoteur. On peut également faire le prémélange de l'agent amphiphile, de la phase organique et éventuellement de l'agent promoteur.

La mise en contact entre la suspension aqueuse ou le précipité et la phase organique peut se faire dans un réacteur qui est sous une atmosphère d'air, d'azote, ou un mélange d'air-azote.

Bien que la mise en contact entre la suspension aqueuse et la phase organique puisse se faire à température ambiante, environ 20°C, il est préférable d'opérer à une température choisie dans un intervalle allant de 60°C à 150°C, avantageusement entre 80°C et 140°C.

Dans certains cas, en raison de la volatilité de la phase organique, il y a lieu de condenser ses vapeurs par refroidissement à une température inférieure à son point d'ébullition.

Le mélange réactionnel résultant (mélange de suspension aqueuse, d'agent amphiphile, de phase organique et éventuellement d'agent promoteur) est maintenu sous agitation pendant toute la durée du chauffage, durée qui peut être variable.

Lorsque l'on arrête le chauffage, on note la présence de deux phases : une phase organique contenant la dispersion colloïdale, et une phase aqueuse résiduelle.

On sépare ensuite la phase organique et la phase aqueuse selon les techniques classiques de séparation : décantation, centrifugation.

Conformément à la présente invention, on obtient ainsi des dispersions colloïdales organiques présentant les caractéristiques précitées.

Les dispersions selon le second mode de réalisation de l'invention peuvent être obtenues par mélange d'une première dispersion colloïdale de particules d'un composé d'une terre rare dans une phase organique avec une seconde dispersion colloïdale de particules d'un composé du fer, cette seconde dispersion étant du type selon le premier mode de réalisation de l'invention.

On peut utiliser comme première dispersion de terre rare celles décrites dans EP-A-206907, EP-A-671205 ou WO 00/49098 par exemple.

On mélange de préférence des dispersions dont les phases organiques sont identiques.

Les dispersions colloïdales organiques qui viennent d'être décrites peuvent être employées comme adjuvant de gazole pour moteurs à combustion interne, plus particulièrement comme adjuvant des gazoles pour moteur diesel.

Elles peuvent également être utilisées comme adjuvants de combustion dans les combustibles ou carburants liquides des générateurs énergétiques tels que moteurs à combustion interne (moteurs à explosion), brûleurs à mazout, ou propulseurs à réaction.

Enfin, l'invention concerne un carburant pour moteurs à combustion interne qui contient une dispersion colloïdale du type de celle qui a été décrite plus haut ou obtenue par le procédé décrit précédemment. Ce carburant s'obtient par mélange de celui-ci avec la dispersion de l'invention.

Des exemples vont maintenant être donnés.

EXEMPLE 1

On prépare tout d'abord une solution d'acétate de fer.

412,2 g de $Fe(NO_3)_3$, $5H_2O$ à 98% sont introduits dans un becher et on y ajoute de l'eau déminéralisée jusqu'à un volume de 2 litres. La solution est à 0,5M en Fe. On additionne sous agitation, au goutte à goutte et à température ambiante 650 ml d'ammoniaque à 10% pour atteindre un pH de 7.

On centrifuge 10mn à 4500t/mn. On élimine les eaux mères. On remet en suspension dans de l'eau à un volume total de 2650cm$^3$. On agite 10mn. On centrifuge 10mn à 4500t/mn. On remet en suspension dans de l'eau déminéralisée à 2650 cm$^3$. On laisse 30mn sous agitation. On additionne alors 206ml d'acide acétique concentré. On laisse une nuit sous agitation. La solution est limpide.

La précipitation d'un solide est ensuite réalisée dans un montage en continu comprenant :

- un réacteur d'un litre équipé d'un agitateur à pales avec un pied de cuve initial constitué de 500cm$^3$ d'eau déminéralisée. Ce volume réactionnel sera conservé constant à l'aide d'une surverse;
- deux flacons d'alimentation contenant d'une part la solution d'acétate de fer précédemment décrite et d'autre part, une solution d'ammoniaque 10M.

On additionne la solution d'acétate de fer et la solution d'ammoniaque 10M. Les débits des deux solutions sont fixés de telle manière que le pH soit maintenu constant et égal à 8.

Le précipité obtenu est séparé des eaux mères par centrifugation à 4500t/mn durant 10mn. 95,5 g d'hydrate ainsi recueilli à 21,5 % d'extrait sec (soit 20,0g équivalent de $Fe_2O_3$ ou 0,25 mole en Fe) sont redispersés dans une solution contenant 42,7g d'acide isostéarique et 141,8g d'Isopar L. La suspension est introduite dans un réacteur double enveloppe équipé d'un bain thermostaté et muni d'un agitateur. L'ensemble réactionnel est porté à 90°C pendant 5h30.

Après refroidissement, on transfère dans une éprouvette. On observe une démixtion et on recueille une phase aqueuse de $50cm^3$ et une phase organique de $220cm^3$.

Par cryo-microscopie électronique à transmission, on observe dans la phase organique des particules de diamètre environ 3nm parfaitement individualisées.

L'analyse RX effectuée sur la dispersion montre que les particules sont amorphes.

La dispersion est soumise à un traitement thermique qui comprend un maintien à des paliers de température de -20°C et +80°C sur 6 cycles par jours. Au bout de 6 mois on ne note aucune décantation.

EXEMPLE 2

Cet exemple concerne un essai sur banc moteur mettant en oeuvre la dispersion de l'exemple précédent.

On utilise un moteur Volkswagen turbo diesel de 1,9 l de cylindré, avec boîte manuelle qui est placé sur un banc dynamométrique. La ligne d'échappement est équipée d'un filtre à particules en carbure de silicium (IBIDEN 200cpsi 5,66 x 6,00) de 2,5 litres. La température des gaz d'échappement est mesurée à l'entrée du filtre à particules grâce à des thermocouples. La pression différentielle entre l'entrée et la sortie du filtre à particules est mesurée également.

La dispersion organique obtenue à l'exemple précédent est ajoutée au carburant de manière à réaliser un dosage à 7 ppm de métal par rapport au carburant additivé.

Le filtre à particules est chargé en particules dans les conditions suivantes :

- vitesse de rotation du moteur : 2000t/min
- couple 60Nm
- température d'entrée des gaz dans le filtre : 250°C
- durée de chargement : 8 heures

La combustion des suies piégées dans le filtre à particules est réalisée dans les conditions suivantes avec une vitesse de rotation du moteur de 2000t/mn en respectant le cycle comprenant les 8 paliers de 15 minutes chacun décrits ci-dessous :

| Paliers | Température à l'entrée du filtre (°C) | Couple (Nm) |
|---|---|---|
| 1 | 275 | 89 |
| 2 | 300 | 105 |
| 3 | 325 | 121 |
| 4 | 350 | 149 |
| 5 | 375 | 231 |
| 6 | 400 | 244 |
| 7 | 425 | 254 |
| 8 | 450 | 263 |

La perte de charge créée par le filtre à particules augmente dans un premier temps du fait de l'augmentation de température puis elle atteint un maximum avant de redescendre du fait de la combustion des matériaux carbonés accumulés dans le filtre à particules. On considère le point (repéré par sa température) à partir duquel la perte de charge n'augmente plus, comme représentatif du point de régénération du filtre à particules par l'additif.

Lors du passage du palier 6 au palier 7, on observe une diminution de la perte de charge qui correspond à la combustion des suies dans le filtre. La température de début de combustion est comprise entre 400°C et 425°C et elle est plus précisément de 405°C. La combustion des suies entraîne une baisse de la perte de charge à 425°C de 6,49mbar/min.

Ces résultats montrent une température de régénération qui est basse pour un dosage en additif dans le carburant qui est faible.

## Revendications

**1.** Dispersion colloïdale **caractérisée en ce qu'**elle comprend :

- une phase organique;
- des particules d'un composé du fer sous forme amorphe, consistant essentiellement en un oxyde, un hydroxyde ou un oxyhydroxyde de fer ou un mélange de ceux-ci et présentant un $d_{50}$ compris entre 1 nm et 5 nm;
- au moins un agent amphiphile.

**2.** Dispersion colloïdale selon la revendication 1 **caractérisée en ce qu'**elle comprend :

- une phase organique;
- des particules d'un composé du fer sous forme amorphe, consistant essentiellement en un oxyde, un hydroxyde ou un oxyhydroxyde de fer ou un mélange de ceux-ci et présentant un $d_{50}$ compris entre 1 nm et 5 nm;
- des particules d'un composé d'une terre rare;
- au moins un agent amphiphile.

**3.** Dispersion selon la revendication 1 ou 2, **caractérisée en ce qu'**au moins 85% des particules du composé du fer sont des particules primaires.

**4.** Dispersion selon la revendication 1 ou 2, **caractérisée en ce qu'**au moins 90% des particules du composé du fer sont des particules primaires.

**5.** Dispersion selon la revendication 1 ou 2, **caractérisée en ce qu'**au moins 95% des particules du composé du fer sont des particules primaires.

**6.** Dispersion l'une des revendications précédentes, **caractérisée en ce que** les particules présentent un $d_{50}$ compris entre 3 nm et 4 nm.

**7.** Dispersion selon l'une des revendications précédentes, **caractérisée en ce que** la phase organique est à base d'un hydrocarbure apolaire.

**8.** Dispersion selon l'une des revendications précédentes, **caractérisée en ce que** l'agent amphiphile est un acide carboxylique comportant de 10 à 50 atomes de carbone, plus particulièrement de 15 à 25 atomes de carbone.

**9.** Dispersion selon l'une des revendications 2 à 8, **caractérisée en ce que** la terre rare est choisie parmi le cérium, le lanthane, l'yttrium, le néodyme, le gadolinium, le praséodyme.

**10.** Dispersion selon l'une des revendications 1 à 9, **caractérisée en ce que** le fer est à l'état d'oxydation 3.

**11.** Procédé de préparation d'une dispersion selon l'une des revendications 1 et 3 à 10, **caractérisé en ce qu'**il comporte les étapes suivantes :

- a) on fait réagir avec une base soit un sel de fer en présence d'un complexant du fer soit un complexe du fer, en maintenant le pH du milieu réactionnel à une valeur d'au plus 8 ce par quoi on obtient un précipité, le complexant du fer étant choisi parmi les acides carboxyliques hydrosolubles présentant une constante de complexation K telle que le pK soit d'au moins 3 et le complexe du fer étant choisi parmi les produits de la réaction des sels de fer avec lesdits acides;
- b) on met en contact avec une phase organique en présence d'un agent amphiphile
- soit le précipité directement obtenu à l'issue de la réaction de l'étape a) et séparé du milieu réactionnel,
- soit le précipité en suspension dans son milieu réactionnel,
- soit le précipité directement obtenu à l'issue de la réaction de l'étape a), séparé du milieu réactionnel et remis en suspension aqueuse, ce par quoi on obtient la dispersion en phase organique.

**12.** Procédé selon la revendication 11, **caractérisé en ce que** l'acide carboxylique précité est choisi parmi les acides carboxyliques aliphatiques, les acides-alcools ou les polyacides-alcools, les amine-acides, les acides polyacryliques.

**13.** Procédé selon la revendication 12, **caractérisé en ce que** l'acide carboxylique aliphatique est l'acide formique ou

l'acide acétique et le polyacide-alcool est l'acide tartrique ou l'acide citrique.

**14.** Procédé selon l'une des revendications 11 à 13, **caractérisé en ce qu'**on maintient le pH du milieu réactionnel à une valeur d'au plus 7,5, plus particulièrement comprise entre 6,5 et 7,5.

**15.** Procédé selon l'une des revendications 11 à 14, **caractérisé en ce qu'**on maintient et on fait mûrir le précipité dans le milieu réactionnel à la fin de l'étape a).

**16.** Utilisation d'une dispersion colloïdale selon l'une des revendications 1 à 10 comme adjuvant de carburant pour moteurs à combustion interne.

**17.** Carburant pour moteurs à combustion interne **caractérisé en ce qu'**il contient une dispersion colloïdale selon l'une des revendications 1 à 10.

## Patentansprüche

**1.** Kolloidale Dispersion, **dadurch gekennzeichnet, dass** sie Folgendes umfasst:

- eine organische Phase;
- Teilchen einer Eisenverbindung in amorpher Form, die im Wesentlichen aus einem Oxid, einem Hydroxid oder einem Oxidhydroxid von Eisen oder einer Mischung davon bestehen und einen $d_{50}$-Wert zwischen 1 nm 5 nm aufweisen;
- mindestens ein amphiphiles Mittel.

**2.** Kolloidale Dispersion nach Anspruch 1, **dadurch gekennzeichnet, dass** sie Folgendes umfasst:

- eine organische Phase;
- Teilchen einer Eisenverbindung in amorpher Form, die im Wesentlichen aus einem Oxid, einem Hydroxid oder einem Oxidhydroxid von Eisen oder einer Mischung davon bestehen und einen $d_{50}$-Wert zwischen 1 nm und 5 nm aufweisen;
- Teilchen einer Verbindung eines Seltenerd-metalls;
- mindestens ein amphiphiles Mittel.

**3.** Dispersion nach Anspruch 1 oder 2, **dadurch gekennzeichnet, dass** es sich bei mindestens 85% der Teilchen der Eisenverbindung um Primärteilchen handelt.

**4.** Dispersion nach Anspruch 1 oder 2, **dadurch gekennzeichnet, dass** es sich bei mindestens 90% der Teilchen der Eisenverbindung um Primärteilchen handelt.

**5.** Dispersion nach Anspruch 1 oder 2, **dadurch gekennzeichnet, dass** es sich bei mindestens 95% der Teilchen der Eisenverbindung um Primärteilchen handelt.

**6.** Dispersion nach einem der vorhergehenden Ansprüche, **dadurch gekennzeichnet, dass** die Teilchen einen $d_{50}$-Wert zwischen 3 nm und 4 nm aufweisen.

**7.** Dispersion nach einem der vorhergehenden Ansprüche, **dadurch gekennzeichnet, dass** die organische Phase auf einem unpolaren Kohlenwasserstoff basiert.

**8.** Dispersion nach einem der vorhergehenden Ansprüche, **dadurch gekennzeichnet, dass** es sich bei dem amphiphilen Mittel um eine Carbonsäure mit 10 bis 50 Kohlenstoffatomen und spezieller 15 bis 25 Kohlenstoffatomen handelt.

**9.** Dispersion nach einem der Ansprüche 2 bis 8, **dadurch gekennzeichnet, dass** das Seltenerdmetall aus Cer, Lanthan, Yttrium, Neodym, Gadolinium und Praseodym ausgewählt ist.

**10.** Dispersion nach einem der Ansprüche 1 bis 9, **dadurch gekennzeichnet, dass** das Eisen in der Oxidationsstufe 3 vorliegt.

11. Verfahren zur Herstellung einer Dispersion nach einem der Ansprüche 1 und 3 bis 10, **dadurch gekennzeichnet, dass** man:

- a) entweder ein Eisensalz in Gegenwart eines Eisen-Komplexbildners oder einen Eisenkomplex mit einer Base umsetzt, wobei man den pH-Wert des Reaktionsmediums bei einem Wert von höchstens 8 hält, wodurch man einen Niederschlag erhält, wobei der Eisen-Komplexbildner aus wasserlöslichen Carbonsäuren mit einer solchen Komplexierungskonstante K ausgewählt wird, dass der pK-Wert mindestens 3 beträgt, und der Eisenkomplex aus den Produkten der Umsetzung von Eisensalzen mit diesen Säuren ausgewählt wird;
- b)
- entweder den direkt aus der Umsetzung von Schritt a) erhaltenen und aus dem Reaktionsmedium abgetrennten Niederschlag
- oder den in dem Reaktionsmedium suspendierten Niederschlag
- oder den direkt aus der Umsetzung von Schritt a) erhaltenen, aus dem Reaktionsmedium abgetrennten und wässrig suspendierten Niederschlag in Gegenwart eines amphiphilen Mittels mit einer organischen Phase in Berührung bringt, wodurch man die Dispersion in organischer Phase erhält.

12. Verfahren nach Anspruch 11, **dadurch gekennzeichnet, dass** die obige Carbonsäure aus aliphatischen Carbonsäuren, Säurealkoholen oder Polysäurealkoholen, Aminosäuren und Polyacrylsäuren ausgewählt wird.

13. Verfahren nach Anspruch 12, **dadurch gekennzeichnet, dass** es sich bei der aliphatischen Carbonsäure um Ameisensäure oder Essigsäure handelt und es sich bei dem Polysäurealkohol um Weinsäure oder Citronensäure handelt.

14. Verfahren nach einem der Ansprüche 11 bis 13, **dadurch gekennzeichnet, dass** man den pH-Wert des Reaktionsmediums bei einem Wert von höchstens 7,5 und spezieller zwischen 6,5 und 7,5 hält.

15. Verfahren nach einem der Ansprüche 11 bis 14, **dadurch gekennzeichnet, dass** man den Niederschlag am Ende von Schritt a) in dem Reaktionsmedium hält und reifen lässt.

16. Verwendung einer kolloidalen Dispersion nach einem der Ansprüche 1 bis 10 als Kraftstoffzusatz für Verbrennungsmotoren.

17. Kraftstoff für Verbrennungsmotoren, **dadurch gekennzeichnet, dass** er eine kolloidale Dispersion nach einem der Ansprüche 1 bis 10 enthält.

## Claims

1. Colloidal dispersion **characterized in that** it comprises:

- an organic phase;
- particles of an iron compound in amorphous form, consisting essentially of an iron oxide, hydroxide or oxyhydroxide or a mixture thereof and having a $d_{50}$ of between 1 nm and 5 nm;
- at least one amphiphilic agent.

2. Colloidal dispersion according to Claim 1, **characterized in that** it comprises:

- an organic phase;
- particles of an iron compound in amorphous form, consisting essentially of an iron oxide, hydroxide or oxyhydroxide or a mixture thereof and having a $d_{50}$ of between 1 nm and 5 nm;
- particles of a compound of a rare earth metal;
- at least one amphiphilic agent.

3. Dispersion according to Claim 1 or 2, **characterized in that** at least 85% of the particles of the iron compound are primary particles.

4. Dispersion according to Claim 1 or 2, **characterized in that** at least 90% of the particles of the iron compound are primary particles.

5. Dispersion according to Claim 1 or 2, **characterized in that** at least 95% of the particles of the iron compound are primary particles.

6. Dispersion according to one of the preceding claims, **characterized in that** the particles have a $d_{50}$ of between 3 nm and 4 nm.

7. Dispersion according to one of the preceding claims, **characterized in that** the organic phase is based on a nonpolar hydrocarbon.

8. Dispersion according to one of the preceding claims, **characterized in that** the amphiphilic agent is a carboxylic acid comprising from 10 to 50 carbon atoms, more particularly from 15 to 25 carbon atoms.

9. Dispersion according to one of Claims 2 to 8, **characterized in that** the rare earth metal is chosen from cerium, lanthanum, yttrium, neodymium, gadolinium and praseodymium.

10. Dispersion according to one of Claims 1 to 9, **characterized in that** the iron is in oxidation state 3.

11. Process for preparing a dispersion according to one of Claims 1 and 3 to 10, **characterized in that** it comprises the following steps:

    - a) a base is reacted with either an iron salt in the presence of an iron-complexing agent, or an iron complex, while maintaining the pH of the reaction medium at a value of at most 8, as a result of which a precipitate is obtained, the iron-complexing agent being chosen from water-soluble carboxylic acids having a complexation constant K such that the pK is at least 3
    and the iron complex being chosen from the products of the reaction of the iron salts with said acids;
    - b) one of the following is brought into contact with an organic phase in the presence of an amphiphilic agent:

        - either the precipitate directly obtained at the end of the reaction of step a) and separated from the reaction medium,
        - or the precipitate in suspension in its reaction medium,
        - or the precipitate directly obtained at the end of the reaction of step a), separated from the reaction medium and resuspended in an aqueous suspension, as a result of which dispersion in the organic phase is obtained.

12. Process according to Claim 11, **characterized in that** the abovementioned carboxylic acid is chosen from aliphatic carboxylic acid, acid alcohols or polyacid alcohols, amino acids and polyacrylic acids.

13. Process according to Claim 12, **characterized in that** the aliphatic carboxylic acid is formic acid or acetic acid and the polyacid alcohol is tartaric acid or citric acid.

14. Process according to one of Claims 11 to 13, **characterized in that** the pH of the reaction medium is maintained at a value of at most 7.5, more particularly between 6.5 and 7.5.

15. Process according to one of Claims 11 to 14, **characterized in that** the precipitate is maintained and matured in the reaction medium at the end of step a).

16. Use of a colloidal dispersion according to one of Claims 1 to 10, as a fuel additive for internal combustion engines.

17. Fuel for internal combustion engines, **characterized in that** it contains a colloidal dispersion according to one of Claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6136048 A
- US 6271269 B
- WO 0194262 A
- JP 51122107 A
- JP 62167393 A
- EP 206907 A
- EP 671205 A
- WO 0049098 A